**Europäisches Patentamt**

**European Patent Office**

**Office européen des brevets**

(19)

(11) Veröffentlichungsnummer: **0 199 670
B1**

# (12) EUROPÄISCHE PATENTSCHRIFT

(45) Veröffentlichungstag der Patentschrift:
**14.06.89**

(21) Anmeldenummer: **86810141.1**

(22) Anmeldetag: **25.03.86**

(51) Int. Cl.⁴: **C09B 1/48,** C09B 3/38,
C09B 3/00, C09B 5/00

(54) **Verfahren zur Herstellung von Anthrachinonimidverbindungen.**

(30) Priorität: **01.04.85 CH 1400/85**

(43) Veröffentlichungstag der Anmeldung:
**29.10.86 Patentblatt 86/44**

(45) Bekanntmachung des Hinweises auf die Patenterteilung:
**14.06.89 Patentblatt 89/24**

(84) Benannte Vertragsstaaten:
**CH DE FR GB LI**

(56) Entgegenhaltungen:
**EP-A- 0 047 205
DE-C- 162 824
DE-C- 240 276**

(73) Patentinhaber: **CIBA-GEIGY AG, Klybeckstrasse 141,
CH-4002 Basel(CH)**

(72) Erfinder: **Blattner, Rudolf, Dr., Rheinmattenweg 14,
D-7888 Rheinfelden 4(DE)**

**Beschreibung**

Viele Anthrachinonimidverbindungen werden durch Kondensation einer verküpbaren Anthrachinonverbindung, welche mindestens eine primäre Aminogruppe aufweist, mit einer aromatischen Halogenverbindung hergestellt. Die Kondensation erfolgt zweckmäßig bei erhöhter Temperatur im organischen Lösungsmittel in Gegenwart eines basischen Mittels und einer Kupferverbindung, wobei man üblicherweise die Edukte in das organische Lösungsmittel gibt und anschließend auf die Reaktionstemperatur aufheizt. Dieses Verfahren ist jedoch noch mit Nachteilen behaftet. Die erhaltenen Kondensationsprodukte enthalten Verunreinigungen und außerdem sind relativ große Mengen an organischem Lösungsmittel erforderlich, damit die Reaktionsmischung gut rührbar ist.

Gemäß DE-C 240 276 wird die Umsetzung von Aminoanthrachinonen mit in o-Stellung halogenierten Aminoanthrachinonen bei höherer Temperatur in einem hochsiedenden Lösungsmittel wie Naphthalin bei Gegenwart von Kupferpulver und mit Zusatz von Natriumacetat durchgeführt. Gemäß EP-A 47 205, Beispiel 6, wird innert 2 Stunden eine Lösung bei 160°C einer Aminoanthrachinonverbindung in Nitrobenzol auf eine Mischung von 160°C enthaltend Nitrobenzol, Dichloranthrachinon, Natriumbicarbonat und Kupferacetat zugegeben, worauf die Reaktionsmischung noch 2 weitere Stunden bei 160°C gehalten wird.

Der vorliegenden Erfindung lag die Aufgabe zugrunde, ein Verfahren zu entwickeln, das die genannten Nachteile nicht aufweist bzw. reduziert. Gemäß vorliegender Erfindung wird diese Aufgabe dadurch gelöst, daß man die Edukte zu dem organischen Lösungsmittel, das sich auf Reaktionstemperatur befindet, zudosiert. Überraschenderweise erhält man bei dieser Arbeitsweise reinere Produkte in besseren Ausbeuten. Zudem kann man in konzentrierten Lösungen arbeiten, ohne daß die Reaktionsmischung schwer rührbar wird. Zu der Ersparnis an Lösungsmittel kommt als weiterer Vorteil der geringere Aufwand bei der Isolierung des Farbstoffes hinzu und außerdem kann die Menge an basischem Mittel und an Kupferverbindung verringert werden.

Gegenstand der vorliegenden Erfindung ist somit ein Verfahren zur Herstellung von Anthrachinonimidverbindungen durch Kondensation von verküpbaren Anthrachinon-Verbindungen, welche mindestens eine primäre Aminogruppe aufweisen, mit aromatischen Halogenverbindungen in organischen Lösungsmittel in Anwesenheit eines basischen Mittels und eines Kupferkatalysators, dadurch gekennzeichnet, daß man einen Teil des organischen Lösungsmittels auf Reaktionstemperatur, die zwischen 180 und 220°C liegt, erhitzt und bei dieser Temperatur die Edukte in dem organischen Lösungsmittel so zudosiert, daß die Reaktionstemperatur gehalten werden kann.

Die Reaktionstemperatur liegt insbesondere zwischen 195 und 215°C.

Die Edukte, Amino- und Halogenverbindungen, werden zweckmäßigerweise innerhalb von weniger als 10 Minuten, vorzugsweise innerhalb von weniger als 1 Minute und insbesondere innerhalb von höchstens 10 Sekunden, in dem organischen Lösungsmittel auf Reaktionstemperatur erhitzt. Dazu kann man eine Lösung oder Suspension der Edukte durch eine geeignete Maßnahme, z.B. Heizen durch Mikrowellen oder Leiten durch entsprechend gut beheizte Rohre, schnell auf die Reaktionstemperatur bringen. Vorzugsweise werden die Edukte zu dem organischen Lösungsmittel als Festsubstanzen oder vor allem in Form einer Suspension oder Lösung in dem gleichen Lösungsmittel zudosiert. Der Kupferkatalysator und die basische Verbindung können in dem Teil des organischen Lösungsmittels, das auf Reaktionstemperatur erhitzt wird, enthalten sein oder sie können zusammen mit den Edukten zudoisert werden.

Vorzugsweise sind 5 bis 30 Gew.-% dieser Komponenten in dem auf Reaktionstemperatur erhitzten Lösungsmittel und der Rest wird zusammen mit den Edukten zudosiert.

Die verküpbaren Anthrachinonverbindungen mit mindestens einer primären Aminogruppe können die in Küpenfarbstoffen üblichen Substituenten, wie z.B. Halogen, Alkyl, Alkoxy oder Acylamino, wie z.B. Acetylamino oder Benzoylamino, oder auch annellierte Benzolringe enthalten. Vorzugsweise handelt es sich um Aminoanthrachinone, wie z.B. 1-Aminoanthrachinon, 1,4- oder 1,5-Diaminoanthrachinon, 1-Amino-4-benzoylaminoanthrachinon, 1-Amino-5-benzoylaminoanthrachinon oder Aminoviolanthron. Es ist auch möglich, Mischungen aus zwei oder mehreren dieser Verbindungen einzusetzen.

Als aromatische Halogenverbindungen kommen solche in Frage, bei denen das Halogen direkt an den aromatischen Kern gebunden ist. Säurehalogenide von Aromaten oder Verbindungen, die sich ähnlich wie Säurehalogenide verhalten, wie z.B. Cyanurchlorid, sind nicht als aromatische Halogenverbindungen zu verstehen.

Besonders geeignet unter diesen sind halogeniertes, gegebenenfalls noch durch weitere bei Küpenfarbstoffen übliche Substituenten substituiertes Anthrachinon, Benzanthron, Anthanthron, Pyranthron, Dibenzanthron, Phthaloylacridon, Flavanthron, Dibenzpyrenchinon oder Isoviolanthron.

Besonders gute Ergebnisse im erfindungsgemässen Verfahren werden erhalten, wenn man chloriertes oder bromiertes, gegebenenfalls durch Benzoylamino substituiertes Anthrachinon, Benzanthron, Anthanthron, Pyranthron oder Dibenzanthron verwendet.

Die Halogenverbindung und die verküpbare Aminoverbindung werden im allgemeinen in etwa stöchiometrischen Mengen eingesetzt, ein Ueberschuss von z.B. 10% an einer der Komponenten ist jedoch ebenfalls möglich.

Als organische Lösungsmittel kommen inerte Lösungsmittel, wie. z.B. Sulfolan, Naphthalin oder Nitrotoluol, insbesondere jedoch Nitrobenzol in Betracht.

EP 0 199 670 B1

Als Kupferkatalysatoren kommen metallisches Kupfer sowie Kupferverbindungen, wie z.B. Kupferoxid oder Kupfer-I-chlorid in Frage. Bevorzugt sind Kupfer sowie vor allem Kupfer-I-chlorid.

Geeignete basische Mittel sind beispielsweise Natriumhydrogencarbonat, Kaliumhydrogencarbonat, Natriumacetat, Kaliumacetat, Natriumcarbonat und Kaliumcarbonat sowie auch Mischungen dieser Verbindungen.

Die erforderliche Menge an Kupferkatalysator liegt dabei unter der für die Anthrimidsynthese unter üblichen Methoden erforderlichen Menge. Im allgemeinen benötigt man 0,1 bis 1 Gew.%, bezogen auf gebildetes Anthrimid.

Nach der Kondensationsreaktion werden die Anthrachinonimidverbindungen auf übliche Art und Weise isoliert, beispielsweise indem man das Lösungsmittel durch Wasserdampfdestillation entfernt, danach das Kondensationsprodukt abfiltriert und trocknet.

Das Verfahren kann in den allgemein üblichen Apparaturen ausgeführt werden, die dem Fachmann bekannt sind.

Darüberhinaus ist es möglich, die Reaktion in einem Apparat auszuführen, der zur anschliessenden Entfernung des Lösungsmittels geeignet ist, z.B. in einem Schaufeltrockner, Mischer oder Kneter. Besonders geeignet sind hierbei Mischer mit Einbauten zum Dispergieren der Reaktionsmasse, z.B. Drais-T-Reaktoren mit Messer- oder Stiftmühle oder Lödicke-Mischer gleicher Bauart.

Mittels des erfindungsgemässen Verfahren wird eine Steigerung der Ausbeute gegenüber den bekannten Verfahren erreicht; darüberhinaus werden qualitätsverbesserte Produkte erhalten, die z.B. durch eine grössere Reinheit und Farbstärke gekennzeichnet sind.

Die erhaltenenen Anthrachinonimidverbindungen sind meist Farbstoff-Zwischenprodukte; sie ergeben nach der Ueberführung in Carbazol- oder Acridin-Derivate Küpenfarbstoffe, die Verwendung finden zum Färben und Bedrucken von Textilmaterialien wie z.B. Baumwolle.

Die folgenden Beispiele dienen der Erläuterung der Erfindung, ohne sie darauf zu beschränken. Die Temperaturangaben beziehen sich auf Grad Celsius.

Beispiel 1

In 500 ml Nitrobenzol werden bei Raumtemperatur 122 g 1-Chloranthrachinon (99%ig), 60 g 1,4-Diaminoanthrachinon (91%ig), 50 g Natriumcarbonat (Soda) und 1,5 g CuCl intensiv gemischt. Die erhaltene Suspension wird innerhalb von 1,5 Stunden zu einer siedenden Suspension von 50 ml Nitrobenzol, 10 g Soda und 0,5 Kupferchlorid so zudosiert, dass ein ständiges Sieden (210 bis 215°; leichte Destillation) aufrecht erhalten werden kann. Nach einer Reaktionszeit von weiteren 2,5 Stunden bei dieser Temperatur ist die Umsetzung beendet und die Reaktionsmasse kann wie üblich aufgearbeitet werden (Wasserdampfdestillation, Filtration oder Trocknung aus Nitrobenzol in einem Venuleth unter Vakuum). Nach der Trocknung aus Nitrobenzol kann zur Entfernung der Salze in Wasser angeschlämmt und danach filtriert werden.

Ausbeute: 225 g Trianthrimid (salzhaltige Ware) oder 170 g nach Entsalzung und Trocknung.

Beispiel 2

Arbeitet man wie im Beispiel 1 beschrieben, suspendiert jedoch das 1-Chloranthrachinon, 1,4-Diaminoanthrachinon, Natriumcarbonat und CuCl in 300 ml Nitrobenzol, so erhält man das Anthrimid mit einer Ausbeute, die der des Beispiels 1 entspricht. Ein solch konzentriertes Arbeiten ist bei üblicher Arbeitsweise, wenn man die Komponenten mischt und langsam aufheizt, im Rührkessel nicht mehr durchführbar.

Beispiel 3

Man stellt eine Eduktsuspension gemäss Beispiel 1 oder 2 her, verwendet jedoch 60 g Soda und 2 g Kupfer-I-chlorid. Diese Suspension dosiert man direkt innerhalb von 1,5 Stunden in einem Laborvenuleth mit ca. 100 ml siedendem Nitrobenzol. Während des Dosierens werden gleichzeitig etwa 150 ml Nitrobenzol bereits wieder abdestilliert. Nach erfolgter Zugabe der Eduktsuspension wird die Manteltemperatur auf 230°C erhöht und noch ca. 2 Stunden gehalten. Dabei destilliert die Hauptmenge Nitrobenzol ab. Nach beendeter Umsetzung wird die Manteltemperatur auf 180°C gesenkt und unter vorsichtigem Evakuieren das restliche Nitrobenzol entfernt. Nach dem Abkühlen wird ausgeladen und wie im Beispiel 1 beschrieben aufgearbeitet. Die Ausbeute ist gleich wie im Beispiel 1 oder 2.

Beispiele 4 bis 12

Arbeitet man wie in den Beispielen 1 bis 3 beschrieben, verwendet jedoch anstelle von 1-Chloranthrachinon eine äquivalente Menge der in der folgenden Tabelle in Spalte 2 genannten Halogenverbindung und setzt diese mit der in Spalte 3 augeführten eine Aminogruppe aufweisenden Verbindung in etwa stöchiometrischer Menge bezüglich der Halogenäquivalente um, so erhält man Küpenfarbstoffe, bzw. Vorstufen davon, die, gegebenenfalls nach einer geeigneten Ringschlussreaktion, Baumwolle in der in Spalte 4 verzeichneten Nuance färben.

3

| Beispiel | Halogenverbindung | Verbindung mit Aminogruppe | Nuance |
|----------|-------------------|----------------------------|--------|
| 4 | 3,8-Dibrombenzanthron | 1-Aminoanthrachinon | olive |
| 5 | 1-Chloranthrachinon | 1-Aminoanthrachinon | olive |
| 6 | 3-Brombenzanthron | 1-Aminoanthrachinon | olive |
| 7 | 1,5-Dichloranthrachinon | 1-Aminoanthrachinon | gelb |
| 8 | 1-Chloranthrachinon + 1,5-Dichloranthrachinon | 1-Aminoanthrachinon + 1,5-Diaminoanthrachinon | gelbbraun |
| 9 | 1-Benzoylamino-4-brom-anthrachinon | 1-Amino-5-benzoylamino-anthrachinon | braun |
| 10 | Dibromviolanthron | 1-Aminoanthrachinon | schwarz |
| 11 | 1,4,5-Trichloranhtrachinon | 1-Aminoanthrachinon | khaki |
| 12 | 1-Nitro-4,5-dichloranthrachinon | 1-Aminoanthrachinon | rotbraun |

**Tabelle**

## Patentansprüche

1. Verfahren zur Herstellung von Anthrachinonimidverbindungen durch Kondensation von verküpbaren Anthrachinon-Verbindungen, welche mindestens eine primäre Aminogruppe aufweisen, mit aromatischen Halogenverbindungen in organischen Lösungsmitteln in Anwesenheit eines basischen Mittels und eines Kupferkatalysators, dadurch gekennzeichnet, daß man einen Teil des organischen Lösungsmittels auf Reaktionstemperatur, die zwischen 180 und 220°C liegt, erhitzt und bei dieser Temperatur die Edukte in dem organischen Lösungsmittel so zudosiert, daß die Reaktionstemperatur gehalten werden kann.

2. Verfahren gemäß Anspruch 1, dadurch gekennzeichnet, daß man die Edukte innerhalb von weniger als 10 Minuten, vorzugsweise innerhalb von weniger als 1 Minute und insbesondere innerhalb von höchstens 10 Sekunden, in dem organischen Lösungsmittel auf Reaktionstemperatur erhitzt.

3. Verfahren gemäß einem der Ansprüche 1 oder 2, dadurch gekennzeichnet, daß die Reaktionstemperatur zwischen 195 und 215°C liegt.

4. Verfahren gemäß einem der Ansprüche 1 bis 3, dadurch gekennzeichnet, daß man die Edukte in Form einer Suspension oder Lösung in dem organischen Lösungsmittel zudosiert.

5. Verfahren gemäß einem der Ansprüche 1 bis 4, dadurch gekennzeichnet, daß 5 bis 30 Gew.-% des basischen Mittels und des Kupferkatalysators in dem auf Reaktionstemperatur erhitzten Lösungsmittel sind und der Rest zusammen mit den Edukten zudosiert wird.

6. Verfahren gemäß einem der Ansprüche 1 bis 5, dadurch gekennzeichnet, daß man 1-Aminoanthrachinon, 1,4-Diaminoanthrachinon, 1,5-diaminoanthrachinon, 1-Amino-4-benzoylaminoanthrachinon, 1-Amino-5-benzoylaminoanthrachinon oder Aminoviolanthron einsetzt.

7. Verfahren gemäß einem der Ansprüche 1 bis 6, dadurch gekennzeichnet, daß man als Halogenverbindung ein halogeniertes, gegebenenfalls noch durch weitere bei Küpenfarbstoffen übliche Substituenten substituiertes Anthrachinon, Benzanthron, Anthanthron, Pyranthron, Dibenzanthron, Phthaloylacridon, Flavanthron, Dibenzpyrenchinon oder Isoviolanthron verwendet.

8. Verfahren gemäß Anspruch 7, dadurch gekennzeichnet, daß man chloriertes oder bromiertes Anthrachinon, Benzanthron, Anthanthron, Pyranthron oder Dibenzanthron verwendet.

9. Verfahren gemäß einem der Ansprüche 1 bis 8, dadurch gekennzeichnet, daß man als Kupferkatalysator Kupfer oder vorzugsweise Kupfer-I-chlorid verwendet.

## Claims

1. A process for the preparation of an anthraquinone imide compound by condensing a vattable anthraquinone compound which contains at least one primary amino group with an aromatic halogen compound, in an organic solvent and in the presence of a base and a copper catalyst, which comprises heating a portion of the organic solvent to the reaction temperature, which is between 180 and 220°C, and, at this temperature, metering in the educts, in the organic solvent, in such a manner that the reaction temperature can be maintained.

2. A process according to claim 1, which comprises heating the educts, in the organic solvent, to the reaction temperature within less than 10 minutes, preferably within less than 1 minute, and in particular within not more than 10 seconds.

3. A process according to either of claims 1 or 2, wherein the reaction temperature is between 195 and 215°C.

4. A process according to any one of claims 1 to 3, which comprises metering in the educts in the form of a suspension or solution in the organic solvent.

5. A process according to any one of claims 1 to 4, wherein 5 to 30% by wieght of the base and the copper catalyst are in the solvent which has been heated to the reaction temperature, and the remainder is metered in together with the educts.

6. A process according to any one of claims 1 to 5, which comprises the use of 1-aminoanthraquinone, 1,4-diaminoanthraquinone, 1,5-diaminoanthraquinone,1-amino-4-benzoylaminoanthraquinone, 1-amino-5-benzoylaminoanthraquinone or aminoviolanthrone.

7. A process according to any one of claims 1 to 6, wherein the halogen compound is used as a halogenated anthraquinone, benzanthrone, anthanthrone, pyranthrone, dibenzanthrone, phthaloylacridone, flavanthrone, dibenzypyrenequinone or isoviolanthrone, which compounds may be further substituted by other customary substituents of vat dyes.

8. A process according to claim 7, which comprises the use of chlorinated or brominated anthraquinone, benzanthrone, anthanthrone, pyranthrone or dibenzanthrone.

9. A process according to any one of claims 1 to 8, wherein the copper catalyst used is copper or, preferably, copper(I) chloride.

**Revendications**

1. Procédé de préparation de composés anthraquinoneimides par condensation de dérivés d'anthraquinone cuvables, qui présentent au moins un groupe amino primaire, avec des composés halogénés aromatiques dans des solvants organiques en présence d'un agent basique et d'un catalyseur à base de cuivre, caractérisé en ce que l'on chauffe une partie du solvant organique à une température réactionnelle qui est comprise entre 180 et 220°C, et qu'à cette température, on introduit les réactifs dans le solvant organique par doses telles que la température réactionnelle puisse être maintenue.

2. Procédé selon la revendication 1, caractérisé en ce que l'on amène les réactifs, dans le solvant organique, à la température réactionnelle en moins de 10 minutes, de préférence en moins de 1 minute, et en particulier, en au plus 10 secondes.

3. Procédé selon la revendication 1 ou 2, caractérisé en ce que la température réactionnelle est comprise entre 195 et 215°C.

4. Procédé selon l'une des revendications 1 à 3, caractérisé en ce que l'on introduit les réactifs dans le solvant organique sous la forme d'une suspension ou d'une solution.

5. Procédé selon l'une des revendications 1 à 4, caractérisé en ce que 5 à 30% en poids de l'agent basique et du catalyseur à base de cuivre sont dans le solvant chauffé à la température réactionnelle et que le reste est ajouté par doses conjointement avec les réactifs.

6. Procédé selon l'une des revendications 1 à 5, caractérisé en ce que l'on met en œuvre la 1-aminoanthraquinone, la 1,4-diaminoanthraquinone, la 1,5-diaminoanthraquinone, la 1-amino-4-benzoylaminoanthraquinone, la 1-amino-5-benzoylaminoanthraquinone ou l'aminoviolanthrone.

7. Procédé selon l'une des revendications 1 à 6, caractérisé en ce que comme composé halogéné, on utilise une anthraquinone, une benzanthrone, une anthanthrone, une pyranthrone, une dibenzanthrone, une phtaloylacridone, une flavanthrone, une dibenzopyrènequinone ou une isoviolanthrone halogénée, éventuellement encore substituée par d'autres substituants usuels dans les colorants de cuve.

8. Procédé selon la revendication 7, caractérisé en ce que l'on utilise une anthraquinone, une benzanthrone, une anthanthrone, une pyranthrone ou une dibenzanthrone chlorée ou bromée.

9. Procédé selon l'une des revendications 1 à 8, caractérisé en ce que comme catalyseur à base de cuivre, on utilise le cuivre ou de préférence, le chlorure de cuivre I.